(19) Europäisches Patentamt

European Patent Office

Office européen des brevets

(11) **EP 1 184 796 A1**

(12) **DEMANDE DE BREVET EUROPEEN**

(43) Date de publication:
06.03.2002 Bulletin 2002/10

(51) Int Cl.$^{7}$: **G06F 17/30**

(21) Numéro de dépôt: 00410103.6

(22) Date de dépôt: 29.08.2000

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **Sudimage**
**94230 Cachan (FR)**

(72) Inventeur: **Azencott, Robert**
**75010 Paris (FR)**

(74) Mandataire: **de Beaumont, Michel**
**1, rue Champollion**
**38000 Grenoble (FR)**

(54) **Procédé de navigation associative dans des bases de données multimédia**

(57) L'invention concerne un procédé de navigation associative dans une base de données comportant un grand nombre de documents (D) décomposables en éléments (R1 à Rk), chaque élément étant décrit par un état ou une valeur d'une même caractéristique technique, comprenant les étapes suivantes :

a) analyser la répartition globale des valeurs prises par la caractéristique technique sur l'ensemble des éléments de tous les documents de la base de données, pour constituer une famille suffisamment représentative, mais cependant de taille réduite, de valeurs prototypes pour ladite caractéristique technique ;

b) former à partir de chaque document de la base de données un vecteur dont chaque coordonnée correspond à une valeur prototype de ladite caractéristique, la valeur de chaque coordonnée du vecteur correspondant à la fréquence d'apparition de ladite valeur prototype dans le document ;

c) déterminer les distances entre les vecteurs des divers documents de la base de données ; et

d) associer à chaque document une liste des documents les plus proches pour ladite caractéristique.

| Région homogène R | Couleur COL(D) | Surface relative SURF(D) |
|---|---|---|
| R1 | COL1 | S1 = 40 % |
| R2 | COL2 | S2 = 10 % |
| R3 | COL3 | S3 = 10 % |
| R4 | COL4 | S4 = 10 % |
| R5 | COL5 | S5 = 5 % |
| R6 | COL6 | S6 = 5 % |
| R7 | COL7 | S7 = 20 % |

FIGURE 2

EP 1 184 796 A1

## Description

La présente invention concerne un procédé de gestion de bases de données multimédia et plus particulièrement un procédé de navigation associative dans des bases de données multimédia. Ces bases de données incluent des documents numérisés tels que textes, images, vidéo, enregistrements sonores (musicaux ou vocaux), pages HTML, etc., et peuvent être installées sur les disques durs d'ordinateurs individuels ou de serveurs informatiques.

Des systèmes de gestion de bases de données du commerce tels que ORACLE, INFORMIX, etc. permettent de structurer ces bases du point de vue logique, et d'installer des interfaces d'accès standard à ces bases. Typiquement ces interfaces d'accès standard permettent de répondre à des requêtes de recherche d'un utilisateur via des réseaux de transmission Internet ou Intranet. Par exemple l'utilisateur du procédé peut expliciter des auteurs, types de document, et périodes de parution qui l'intéressent. Les moteurs standard de systèmes de gestion de bases de données permettent alors de renvoyer à l'utilisateur des documents conformes à sa requête.

Pour faciliter l'exploration de grandes bases de données textuelles, divers moteurs de recherche informatisés ont été commercialisés, tels que ALTAVISTA. Ces moteurs partent du principe qu'un texte arbitraire, après analyse automatisée de certains aspects morpho-syntaxiques, peut être automatiquement indexé à partir de l'ensemble de ses contenus sémantiques, le plus souvent représentés par mots-clés, ou encore par l'ensemble des mots signifiants du texte. Une requête textuelle quelconque, écrite en langage libre par un utilisateur, peut être analysée par le moteur de recherche, qui parcourt l'ensemble des textes indexés, pour découvrir les textes correspondant au contenu sémantique de la requête.

Pour étendre cette approche à des bases documentaires d'autres types (telles que photos ou images par exemple), le procédé actuellement le plus courant consiste à associer à chaque document des fiches descriptives très structurées, listant par exemple auteur, titre, source, date, etc. Des fonctionnalités supplémentaires sont alors intégrées aux moteurs de recherche textuels pour que le contenu de la requête textuelle puisse être comparé automatiquement au texte descriptif de chaque document. L'établissement des textes descriptifs nécessite l'intervention d'opérateurs humains.

Dans les deux cas ci-dessus, c'est une requête textuelle explicite de l'utilisateur qui permet au moteur de recherche d'aller chercher des documents dans la base de données. Une phase préalable d'indexation automatique des documents est essentielle pour garantir des recherches rapides en ligne.

Pour effectuer des recherches dans des bases de données d'images, plusieurs moteurs de recherche images informatisés ont été commercialisés, les plus connus étant VIRAGES et QBIC. Les principes adoptés sont la comparaison automatique des couleurs présentes sur une image avec celles présentes sur une autre image, avec quantification automatique de cet écart, afin de chercher rapidement et automatiquement dans une base de données indexée informatiquement toutes les images qui, du point de vue des couleurs, ressemblent assez fortement à une image donnée choisie à l'écran par l'utilisateur du procédé.

Dans l'état de l'art actuel des procédés de comparaison de couleurs entre deux images, le principe est de comparer deux listes de couleurs, calculées par exploration informatique des deux images. L'écart entre deux telles listes est calculé en comparant méthodiquement chaque couleur de la première liste à toutes celles de la deuxième liste.

Ainsi, dans l'état de la technique, on trouve des systèmes relativement simples d'analyse et de classification d'images qui ne se prêtent pas à une indexation informatique comparative et fine d'une base de données d'images.

D'autre part, les procédés de recherche en base de données actuels se basent sur une définition, sémantique ou autre, d'une requête et sur une comparaison de cette définition avec chacun des éléments de la base de données, ce qui entraîne des durées de recherche longues.

Un objet de la présente invention est de prévoir un procédé de navigation de proche en proche dans des bases de données d'images qui permette des recherches d'images similaires à une image donnée de façon fine et rapide.

Un autre objet de la présente invention est de prévoir des variantes du procédé de circulation associative et/ou de recherche adaptées à des bases de données vidéo, sonores, ou autres.

La présente invention vise à permettre la consultation grand public de bases de données multimédia informatisées, accessibles via Internet, à partir d'ordinateurs standard (PC sous Windows NT, par exemple) munis d'un logiciel de navigation commercial standard (Internet Explorer, Netscape, ou autre). Ces bases de données multimédia peuvent typiquement être les éléments d'un catalogue e-commerce (images et textes), ou les contenus iconographiques et articles de grands mensuels en version électronique, ou encore le catalogue e-commerce d'un revendeur de cd-audio, etc.

Plus particulièrement, la présente invention prévoit un procédé de navigation associative dans une base de données comportant un grand nombre de documents décomposables en éléments, chaque élément étant décrit par un état ou une valeur d'une même caractéristique technique, comprenant les étapes suivantes :

a) analyser la répartition globale des valeurs prises par ladite caractéristique technique sur l'ensemble des éléments de tous les documents de la base de données, pour constituer une famille suffisamment représentative, mais cependant de taille réduite, de valeurs prototypes pour ladite caractéristique technique ;

b) former à partir de chaque document de la base de données un vecteur dont chaque coordonnée correspond à une valeur prototype de ladite caractéristique, la valeur de chaque coordonnée du vecteur correspondant à la fréquence d'apparition de ladite valeur prototype dans le document ;

c) déterminer les distances entre les vecteurs des divers documents de la base de données ; et

d) associer à chaque document une liste des documents les plus proches pour ladite caractéristique.

Selon un mode de réalisation de la présente invention, les étapes a) à d) sont répétées pour diverses caractéristiques techniques associables aux documents de la base de données et, à chaque document, sont associées plusieurs listes de documents les plus proches, chaque liste correspondant à l'une desdites caractéristiques.

Selon un mode de réalisation de la présente invention, le procédé comprend l'étape consistant à réaliser une liste de documents les plus proches, résultant d'une combinaison pondérée des listes correspondant aux diverses caractéristiques.

Selon un mode de réalisation de la présente invention, les documents sont des images et la formation dudit vecteur comprend les étapes suivantes :

décomposer chaque image en un nombre k de régions (R1 à Rk) homogènes vis-à-vis de ladite caractéristique et pour lesquelles la valeur moyenne de ladite caractéristique est déterminée ;

déterminer la surface relative (S1 à Sk) de chaque région homogène ;

créer une palette de n valeurs prototypes (n » k) de ladite caractéristique suffisamment proches de toutes les valeurs moyennes observées ;

déterminer pour chaque valeur moyenne (COLj) de chaque image le numéro d'ordre (Mj) de la valeur prototype la plus proche ;

poser G = (M1, M2... Mk) ;

construire un vecteur REPCOL (D) = (RC1... RCn) tel que RCi = 0 si i n'appartient pas à G et RCi = Sj si i appartient à G et est égal à Mj.

Selon un mode de réalisation de la présente invention, les caractéristiques sont des couleurs, et lesdites régions sont de couleurs homogènes.

Selon un mode de réalisation de la présente invention, les caractéristiques sont des textures, et lesdites régions sont de textures homogènes.

Selon un mode de réalisation de la présente invention, les caractéristiques sont des formes, et lesdites régions ont pour contours extérieurs, ou silhouettes, des formes homologues.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente un exemple de décomposition d'une image en régions homogènes ;

la figure 2 représente un tableau correspondant à la décomposition de la figure 1 ; et

la figure 3 représente un vecteur correspondant au tableau de la figure 2.

L'invention implique deux groupes d'utilisateurs du procédé : un groupe d'opérateurs et un groupe d'explorateurs. Le groupe des opérateurs est formé d'un petit nombre d'individus aptes à la mise en oeuvre informatique d'une phase préparatoire destinée à organiser convenablement la base de données. Un opérateur travaille sur ordinateur (de type PC standard par exemple) en communication directe avec la base de données multimédia installée sur disque dur. Le groupe des explorateurs peut être constitué de milliers d'internautes n'ayant aucune familiarité avec les méthodologies de la phase préparatoire et n'ayant aucune connaissance du procédé, autre que celle qui leur sera communiquée en ligne par les pages web du site Internet pour lequel l'invention a été mis en oeuvre.

## 1. Organisation associative de la base de données

### 1.1 Préparation hors-ligne de la base de données par un opérateur

Selon un premier aspect de la présente invention, il est prévu une phase de préparation d'une base de données. Cette phase préparatoire, lancée par un "opérateur", prend place après installation d'une base de données multimédia informatisée sur les disques durs d'un serveur informatique, à l'aide d'un logiciel standard de gestion de base de données (tel que ORACLE).

L'objet de cette phase préparatoire, hors ligne et coûteuse en temps calcul, est essentiellement la génération automatique d'une famille de "tables d'hyperliens", permettant d'associer très rapidement à chaque document D de la base de données multimédia une liste VPREF(D) des Voisins PRÉFérentiels de D : VPREF(D) = (D1, D2, D3... Dr).

La liste VPREF(D) contient les noms de documents (D1, D2, D3... Dr) dont les contenus sémantiques ou graphiques, et/ou l'aspect sont proches de ceux de D. La taille r de cette liste peut dépendre du document D. La liste VPREF(D) est organisée par degré de proximité décroissante avec le document D initial, D1 étant le plus proche de D, D2 étant le document autre que D1 le plus proche de D, et ainsi de suite. La notion de proximité utilisée ici est quantifiée par des "distances" adéquates, et il y a donc autant de tables d'hyperliens que de telles distances. Dans l'implémentation informatique effective de l'invention, chaque nom de document est accompagné bien sûr de son adresse informatique sur les disques durs du serveur informatique de la base de données multimédia. Chacune des "tables d'hyperliens" ci-dessus contient donc autant de listes qu'il y a de documents dans la base de données multimédia, et ces tables sont stockées sur le serveur de base de données multimédia, par exemple sous un système de gestion de bases de données de type ORACLE.

**Génération automatique des "tables d'hyperliens"**

La présente invention prévoit la génération automatique des tables d'hyperliens, stockées en mémoire sur disque dur, dans une "base d'hyperliens", gérée par exemple sous ORACLE.

Pour indexer informatiquement l'ensemble des images de la base de données, l'opérateur spécifie des "caractéristiques techniques" des éléments de la base de données. Pour une image, une première caractéristique technique pourra être la couleur, une deuxième caractéristique technique pourra être la texture, une troisième caractéristique technique pourra être la silhouette, une quatrième caractéristique technique pourra être le contenu sémantique d'un texte associé à l'image.

Pour chaque caractéristique technique, on définit un mode de calcul spécifique pour évaluer une "distance" représentant numériquement l'écart entre deux images, du point de vue de la caractéristique considérée.

Pour chaque image D de la base de données multimédia, on commence par construire une liste ordonnée VOISCAR(D) des VOISins de D pour la CARactéristique considérée :

$$\text{VOISCAR(D)} = (D1, D2, D3... Dm )$$

où D1 est l'image la plus proche de l'image D, où D2 est l'image la plus proche de l'image D autre que l'image D1, et ainsi de suite. Autrement dit les voisins de D sont rangés par ordre croissant de distances à l'image D. La taille m de la liste VOISCAR(D) peut dépendre du document D, car l'invention prévoit deux restrictions sur cette taille :

(a) on impose que m soit inférieur à un entier fixe, choisi par l'opérateur,
(b) on impose que tous les voisins Dj de D soient à une distance de D inférieure à un seuil numérique fixe, choisi par l'opérateur.

Cette procédure est clairement informatisable et est donc lancée, hors ligne, sur toutes les images D de la base de données multimédia, pour fournir l'ensemble de toutes les listes de voisins VOISCAR(D). Cet ensemble de listes VOISCAR(D) constitue une première table d'hyperliens, qui va être stockée en mémoire sur disque dur, dans une base d'hyperliens, par exemple sous ORACLE. Le nombre de tables d'hyperliens associées aux images, égal au nombre de caractéristiques techniques retenues pour préparer la base de données, sera en général compris entre 2 et 6.

**Spécification d'un schéma préférentiel de navigation multimédia**

Le but de cette étape est de spécifier un mode de calcul des voisins préférentiels VPREF(D) pour toute image D de la base de données. Il s'agit ici pour l'opérateur de spécifier un schéma de préférences dans la base de données multimédia, schéma qui va privilégier plus ou moins fortement certaines caractéristiques techniques dans la comparaison rapide d'images entre elles.

Notons s le nombre de caractéristiques techniques spécifiées CARj, $1 \le j \le s$, retenues. Pour toute image D, on peut aller lire dans chacune des tables d'hyperliens ci-dessus une liste de voisins VOISCARj(D) associés à la caractéristique CARj.

L'opérateur va ici spécifier un mode précis de sélection, permettant d'extraire de l'ensemble de tous les voisinages VOISCARj(D), $1 \le j \le s$, une liste PREF(D) de voisins préférentiels de D, ordonnée par préférence décroissante.

De nombreuses variantes pratiques de ce mode de sélection sont envisageables dans le cadre de l'invention.

Nous allons décrire une variante paramétrable de ce mode de sélection. L'opérateur spécifie pour chaque caractéristique un "coefficient d'importance" positif noté "Wj", $1 \leq j \leq s$. On se limite d'emblée à ne considérer que des voisins de D, c'est-à-dire des images "A" appartenant à au moins l'un des voisinages VOISCARj (D).

Fixons une telle image "A" et soit "Nj" son numéro d'ordre dans la liste VOISCARj(D) si A se trouve dans cette liste. Si A n'est pas dans la liste VOISCARj, on pose Nj = b, où l'entier b est un nombre assez grand fixé par l'opérateur. On peut alors calculer la moyenne Q des s nombres (Wj.logNj), et définir un "rang moyen" RM(A) pour l'image "A" ci-dessus, par la formule logRM(A) = Q. Les voisins de l'image D peuvent alors être ordonnés par valeur croissante du "rang moyen" RM défini ci-dessus.

L'opérateur choisit ensuite un nombre entier fixe, et sélectionne tous les voisins de D dont le "rang moyen" est inférieur à ce nombre. Cette famille ordonnée d'images constituera l'ensemble des voisins préférentiels VPREF(D).

Une fois le mode de sélection fixé par l'opérateur, il est possible de lancer hors ligne le calcul systématique de toutes les listes de voisins préférentiels VPREF(D), pour toutes les images D de la base de données, et de stocker en mémoire sur disque dur l'ensemble de ces résultats sous forme d'une nouvelle table d'hyperliens.

Une autre approche intéressante, dans une autre variante de l'invention, consiste à changer à la volée le mode de sélection à mettre en oeuvre, par exemple pour tenir compte de particularités liées à certaines préférences déjà connues de l'internaute qui a lancé la requête portant sur le document D.

### 1.2 Navigation associative sur site Internet

Après s'être connecté au site Internet depuis un ordinateur muni d'un logiciel de navigation tel que Netscape ou Internet Explorer, l'utilisateur internaute accède de façon standard à une "page web" du site permettant l'affichage d'un premier document D de la base de données préparée comme ci-dessus.

Dans le cadre de l'invention, grâce à des codages informatiques standard (réalisables par pages HTML et codes Javascript par exemple), l'internaute déclenche, par clic-souris sur le document affiché, la transmission automatique d'une requête implicite vers le serveur web du site Internet. Le contenu de la requête ainsi transmise est la demande de la liste VPREF(D) des voisins préférentiels de D. On notera que cette requête peut rester complètement implicite, et donc totalement transparente pour l'internaute.

Par des codages informatiques standard (réalisables par exemple en langage Java à l'aide des softwares "Enterprise Java Beans" et par programmation de requêtes SQL), le contenu de la requête implicite ci-dessus déclenche successivement, sur le serveur base de données multimédia, une suite d'opérations informatisées :

    (a) l'accès rapide aux tables d'hyperliens,
    (b) la lecture de la liste D1, D2, D3... Dr des voisins préférentiels de D,
    (c) la retransmission vers le serveur web d'objets informatiques (structurés par exemple à l'aide de codages XML) décrivant les contenus et formats des documents D1 à Dr, ou encore les contenus et formats d'icônes, vignettes, textes, etc. représentant ces documents,
    (d) la retransmission vers l'ordinateur de l'internaute des objets informatiques ci-dessus, qui seront exploités en ligne par un programme adéquat (par exemple à l'aide d'un "parser" écrit en langage Javascript) permettant l'affichage simultané ou séquentiel, sur l'écran de l'internaute, des documents D1 à Dr, ou encore des icônes, vignettes, textes, etc. représentant ces documents.

L'utilisateur internaute, au vu de la liste des documents, vignettes, icônes présentant les réponses possibles à sa requête implicite, peut alors déclencher par des moyens informatiques standard l'affichage pleine page, ou l'inspection dynamique sur son écran, de l'un quelconque de ces documents. Le cycle de la navigation associative peut maintenant reprendre par clic-souris à partir de ce nouveau document, exactement comme on vient de le décrire pour le document précédent.

### 2. Préparation d'une base de données d'images

Selon un deuxième aspect de la présente invention, il est prévu des procédés pour analyser et structurer une base de documents en fonction de caractéristiques techniques choisies. Pour des bases de données d'image, nous présenterons entre autres les caractéristiques techniques suivantes : couleur, texture, silhouette.

Pour chaque caractéristique technique que l'opérateur a décidé d'utiliser, et dont il a spécifié une méthode de calcul informatisable, l'opérateur doit ensuite spécifier une méthode informatisable pour calculer une "distance" numérique, pour cette caractéristique, entre deux documents quelconques.

La présente invention prévoit de construire des caractéristiques techniques représentables sous forme de vecteurs à coordonnées numériques, de dimension fixée ou non. Ce point représente un sérieux avantage pour l'implémentation informatique massive et rapide de l'invention.

Après les spécifications des caractéristiques techniques et de leurs modes de calcul informatisé, l'opérateur lance, pour tous les documents non textuels de la base de données multimédia, le calcul informatique intensif systématique et le stockage (sur disque dur) des valeurs de leurs caractéristiques techniques.

Ceci conduit à la création d'une base des caractéristiques techniques calculées informatiquement, base destinée à être stockée sur disque dur, par exemple sous Oracle, les valeurs des caractéristiques techniques de tous les documents de la base de données, les valeurs des distances entre documents, et la liste des plus proches voisins de chaque document, pour chaque caractéristique et éventuellement pour une combinaison pondérée de caractéristiques.

Il s'agit d'une étape de calcul automatique intensif, dont la durée dépend de la taille de la base de données et qui présente l'avantage, selon l'invention, de pouvoir être réalisée hors ligne.

## 2.1 Caractéristique Couleur

A titre de premier exemple, on va considérer une façon de structurer de façon comparative précise une base d'images à partir de leurs couleurs, c'est-à-dire que la caractéristique technique considérée est une caractéristique couleur.

Plusieurs procédés informatiques permettent d'associer à chaque point lumineux ou pixel d'une image numérisée D un vecteur de dimension 3 caractérisant la "couleur" de ce pixel, en coordonnées Rouge/Vert/Bleu, ou en coordonnées LUT, etc.

Comme une image ou une forme contient des centaines de milliers de pixels, il est nécessaire de résumer les informations vectorielles précédentes. Pour cela on applique un des nombreux procédés connus de segmentation informatique pour découper automatiquement l'image ou la forme D en un nombre modéré de régions connexes R1, R2... Rk, chacune de ces régions étant approximativement homogène du point de vue couleurs.

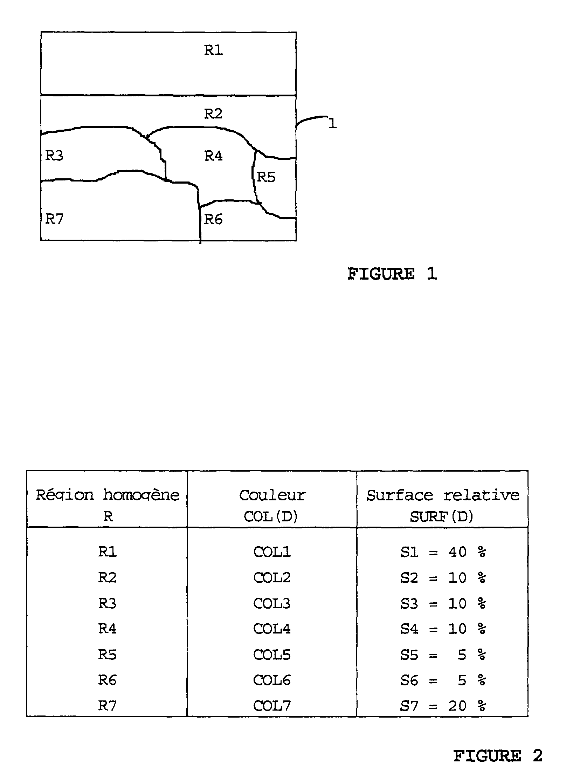

Pour fixer les idées, ceci est illustré très schématiquement en figure 1 où une image 1 est divisée en sept régions de couleurs homogènes R1 à R7, étant entendu que, en pratique, le nombre k de régions est nettement plus élevé mais est choisi inférieur à la centaine pour une image donnée.

Une variante possible, plus rapide et moins précise, consiste à fixer pour les régions R1... Rk un petit nombre de sous-images rectangulaires disposées en pavage régulier pour recouvrir l'image D initiale.

Une fois ce découpage effectué, pour tout entier j tel que $1 \leq j \leq k$, on calcule successivement le rapport Sj de la surface de la région Rj à la surface de l'image D, et la moyenne COLj des valeurs des vecteurs couleurs des pixels de la région Rj.

La "Répartition de Couleurs" de l'image D va pouvoir être calculée à partir des deux listes COL(D) et SURF(D) :

$$COL(D) = (COL1, COL2... COLk ),$$

et

$$SURF(D) = (S1, S2... Sk).$$

La figure 2 illustre un exemple de ces listes.

Il est utile de noter que l'entier k peut varier d'une image à l'autre.

L'ensemble des centaines de milliers de vecteurs couleurs associés à l'ensemble des pixels d'une même image appartient à un espace de dimension 3. On peut calculer des écarts numériques entre deux couleurs en faisant intervenir des formules de calcul comme la distance euclidienne pour les coordonnées Rouge/Vert/Bleu.

L'invention consiste à créer maintenant automatiquement une "palette de couleurs" notée PALCOL, bien adaptée à une description méthodique de l'ensemble des couleurs de toutes les images de la base de données. Par exemple, en subdivisant suffisamment finement l'ensemble des valeurs possibles pour chacune des 3 coordonnées couleur, on peut définir un réseau régulier de n vecteurs couleurs "prototypes" PROCOL que l'on peut regrouper dans une liste ordonnée PALCOL :

$$PALCOL = (PROCOL1, PROCOL2, PROCOL3... PROCOLn),$$

de telle façon que tout vecteur couleur soit très proche d'au moins un des prototypes couleurs PROCOLj. En pratique des valeurs de n comprises entre quelques milliers et quelques dizaines de milliers sont suffisantes.

Une variante plus efficace pour calculer PALCOL est d'appliquer un des nombreux algorithmes connus et publics de "nuées dynamiques", à l'ensemble de tous les vecteurs couleurs de dimension 3 observés sur l'ensemble de toutes les images de la base de données, ce qui permet le découpage automatique de cette "nuée" de vecteurs couleurs en n sous-groupes ou "clusters" de couleurs, chaque cluster étant formé de couleurs très proches les unes des autres. Les couleurs prototypes PROCOLj sont alors les "centres" de ces clusters de couleurs.

Pour une image D, chaque vecteur couleur COLj listé dans COL(D) est présent avec une fréquence Sj listée dans SURF(D) ; le prototype couleur PROCOLm le plus proche de COLj a un numéro d'ordre m = Mj dans la liste ordonnée des prototypes. Lorsque j parcourt les valeurs 1 à k, ceci fournit une liste non ordonnée G de k entiers distincts, G = (M1, M2... Mk).

Pour tout entier i, $1 \leq i \leq n$, posons alors :

RCi = 0, si i n'est pas dans la liste G,
RCi = Sj, si i est dans la liste G, et est égal à Mj.

La RÉPartition de COuLeurs de l'image D sera le vecteur REPCOL(D) suivant, de dimension n :

$$REPCOL(D) = (RC1, RC2, RC3... RCn ).$$

Les Répartitions de Couleurs REPCOL(D) sont donc des vecteurs appartenant à un espace vectoriel de dimension n. Chacune des coordonnées d'un tel vecteur correspond à une des couleurs de la "palette de couleurs" PALCOL, et indique avec quelle fréquence cette couleur est présente sur l'image D.

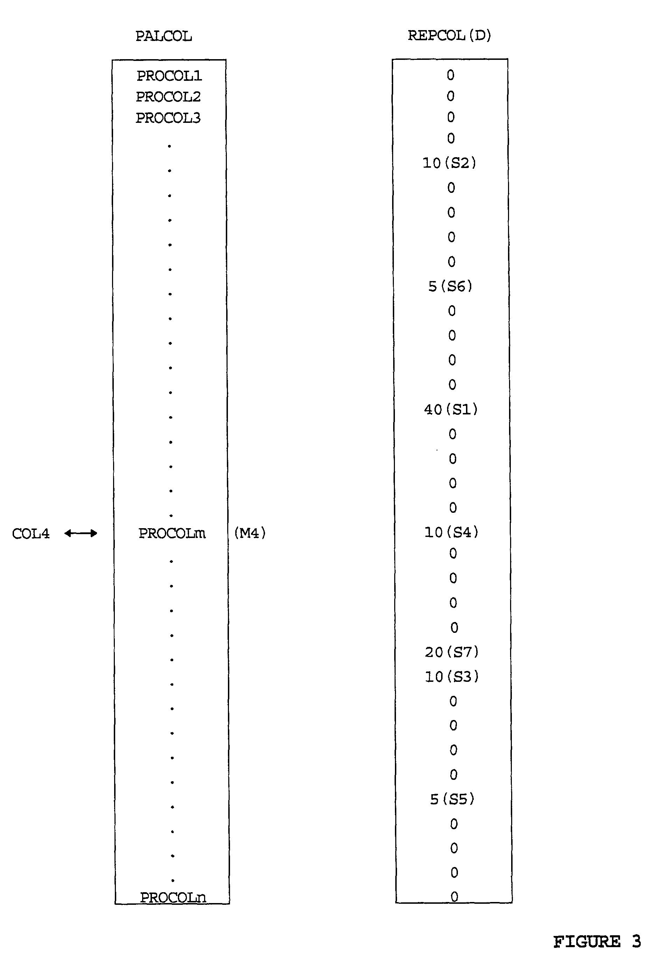

Ceci est illustré très schématiquement en figure 3 dans laquelle on a représenté la palette de couleurs PALCOL comprenant les couleurs élémentaires PROCOL1... PROCOLn. En relation avec l'exemple des figures 1 et 2, on a indiqué que la couleur COL4 de la région R4 est particulièrement proche de la couleur prototype PROCOLm. Ceci est également effectué pour toutes les couleurs COL1 à COL7 des régions R1 à R7 de l'image D de la figure 1.

On peut alors construire le vecteur de répartition de couleurs REPCOL(D) de l'image, dans lequel la valeur de chaque coordonnée de la palette de couleur est remplacée par la surface relative de la région dont la couleur moyenne est la plus proche de la couleur correspondant à cette coordonnée.

A partir des vecteurs REPCOL(D), on peut déterminer la "distance" entre deux images quelconques v et w.

Notons Bij le carré de l'écart numérique entre deux prototypes couleurs PROCOLi et PROCOLj. En particulier, Bii représentera le carré de la "longueur" de PROCOLi. Définissons des nombres Kij, représentant le produit scalaire entre les vecteurs (de dimension 3) PROCOLi et PROCOLj, par la formule : 2Kij = Bii + Bjj - Bij. Prenons deux "Répartitions de Couleurs" quelconques Y et Z, et notons respectivement Y1, Y2... Yn les coordonnées de Y et Z1, Z2... Zn les coordonnées de Z. Le carré DELTA de la "distance" entre deux Répartitions de Couleurs Y et Z sera défini par :

$$DELTA = Somme \ de \ (Kij \ x \ Yi \ x \ Zj), \ pour \ 1 \leq i, \ j \leq n.$$

On a ainsi déterminé la distance entre deux images. A partir de ces distances, il sera alors possible pour chaque image, et pour la caractéristique couleur, d'établir la liste des voisins les plus proches de cette image D. Cette liste pourra être utilisée conformément à ce qui a été exposé au point 1.1 de la présente description.

### 2.2 Caractéristique Texture

A titre de deuxième exemple, on va considérer une façon de classer des images par leur texture, c'est-à-dire que la caractéristique technique considérée est une caractéristique texture.

Plusieurs procédés informatiques permettent d'associer à chaque pixel d'une image numérisée D un vecteur de dimension assez élevée t caractérisant la "texture" de ce pixel. Le vecteur texture peut par exemple être calculé par des techniques connues d'analyse en ondelettes, ou d'analyse de Fourier rapide, etc. ; la dimension t du vecteur texture est typiquement comprise entre 32 et 1024.

Comme une image contient fréquemment des centaines de milliers de pixels, il est nécessaire de résumer les centaines de milliers d'informations textures précédentes. Pour cela, on peut appliquer un des nombreux procédés connus de segmentation informatique pour découper automatiquement l'image D en un nombre modéré de régions connexes R1, R2... Rp, chacune de ces régions Rj étant approximativement homogène du point de vue texture. Typiquement le nombre p de régions ne dépasse pas la centaine pour une image donnée.

Une autre variante possible, plus rapide et moins précise, consiste à fixer pour les régions R1... Rp un petit nombre de sous-images rectangulaires disposées en pavage régulier pour recouvrir l'image ou la forme D initiale.

Pour chaque entier j, $1 \leq j \leq p$, on calcule successivement le rapport Sj de la surface de la région Rj à la surface de l'image ou de la forme D, et la moyenne TEXj du vecteur WP lorsque le pixel P parcourt la région Rj.

La "répartition de textures" de l'image D va pouvoir être calculée à partir des deux listes TEX(D) et SURF(D) :

$$TEX(D) = (TEX1, TEX2... TEXp),$$

et

$$SURF(D) = (S1, S2... Sp).$$

L'entier p peut varier d'une image à l'autre.

L'ensemble des centaines de milliers de vecteurs textures associés à l'ensemble des pixels d'une même image appartient à un espace texturel de dimension t. On peut calculer des écarts numériques entre deux textures en faisant intervenir des formules de calcul comme la distance euclidienne.

En appliquant une méthode de compression, telle que par exemple l'analyse en composantes principales de l'ensemble des vecteurs "textures" observés sur l'ensemble des images de la base de données multimédia, on commence par réduire la dimension effective de l'espace texturel à une valeur s plus petite que t.

L'invention prévoit de créer automatiquement une palette de textures notée PALTEX, bien adaptée à une description méthodique de l'ensemble des textures de toutes les images de la base de données. Par exemple, en subdivisant suffisamment finement l'ensemble des valeurs possibles pour chacune des s coordonnées comprimées de l'espace texturel, on peut définir un réseau régulier de m vecteurs textures "prototypes" que l'on peut regrouper dans une liste ordonnée :

$$PALTEX = (PROTEX1, PROTEX2, PROTEX3... PROTEXm),$$

de telle façon que tout vecteur texture soit très proche d'au moins un des prototypes textures PROTEXj. En pratique des valeurs de m comprises entre quelques milliers et quelques dizaines de milliers sont suffisantes.

Pour une image D, chaque vecteur texture TEXj listé dans TEX(D) est présent dans l'image D avec une fréquence Sj listée dans SURF(D) ; le prototype texture PROTEXr le plus proche de TEXj a un numéro d'ordre r = Nj dans la palette de textures PALTEX. Lorsque j parcourt les valeurs 1 à p, ceci fournit une liste non ordonnée H de p entiers distincts :

$$H = (N1, N2... Np).$$

Pour tout entier i, $1 \leq i \leq m$, posons alors :

RTi = 0, si i n'est pas dans la liste H,
RTi = Sj, si i est dans la liste H, et est égal à Nj.

La "REPartition de TEXtures" de l'image D sera le vecteur REPTEX(D) suivant, de dimension n :

$$REPTEX(D) = (REPTEX1, REPTEX2, REPTEX3... REPTEXn).$$

Les "Répartitions de Textures" REPTEX(D) sont donc des vecteurs appartenant à un espace vectoriel de dimension n. Chacune des coordonnées d'un tel vecteur correspond à une des textures de la palette de textures PALTEX, et indique avec quelle fréquence cette texture est présente sur l'image D.

Nous allons spécifier un mode de calcul de distance entre deux répartitions de textures quelconques v et w. Notons Gij le carré de l'écart numérique entre deux prototypes textures PROTEXi et PROTEXj. En particulier, Gii représentera le carré de la "longueur" de PROTEXi. Définissons des nombres Lij, représentant le produit scalaire entre deux prototypes textures PROTEXi et PROTEXj, qui sont donc deux vecteurs de dimension s, par la formule :

$$2 \times Lij = Gii + Gjj - Gij.$$

Prenons deux vecteurs "Répartition de Textures" quelconques Y et Z, et notons respectivement Y1, Y2... Ym les coordonnées de Y, et Z1, Z2... Zm les coordonnées de Z. Le carré GAMMA de la distance entre Y et Z sera défini par :

$$GAMMA = Somme\ de\ (Lij\ x\ Yi\ x\ Zj),\ pour\ 1 \leq i, j \leq m.$$

### 2.3 Caractéristique Silhouette

A titre de troisième exemple, on va considérer une façon de classer des images par les silhouettes qu'elles contiennent, c'est-à-dire que la caractéristique technique considérée est une caractéristique silhouette.

La "silhouette" d'une forme F constitue un codage informatique de la courbe fermée définissant le contour extérieur de cette forme. Classiquement un tel contour extérieur est approché par un polygone SIL(F) ayant un nombre suffisant r de sommets, et est enregistré sous forme d'une séquence de pixels :

$$SIL(F) = (P1, P2, P3... Pr)$$

où chaque pixel est repéré par son abscisse et son ordonnée dans l'image.

Lorsque F décrit l'ensemble des formes identifiées dans la base de données d'images, l'ensemble des vecteurs silhouettes SIL(F) correspondants constitue un "nuage de points" dans un espace vectoriel de dimension 2r.

On peut définir des écarts numériques entre deux silhouettes faisant intervenir des formules explicites de calcul, ce qui fournira une mesure numérique de la différence entre deux silhouettes quelconques SIL(F) et SIL(F').

En appliquant par exemple une des méthodes connues de "nuées dynamiques", on peut découper l'ensemble des silhouettes identifiées sur la totalité des images de la base de données en q clusters de silhouettes, toutes les silhouettes d'un même cluster étant très proches les unes des autres, et identifier les silhouettes qui sont aux "centres" de ces clusters.

L'invention consiste à considérer toutes ces silhouettes centres de clusters comme une famille de "prototypes silhouettes" que l'on peut regrouper dans une liste ordonnée PALSIL de q prototypes silhouettes, liste appelée ici "Palette de Silhouettes" :

$$PALSIL = (PROSIL1, PROSIL2, PROSIL3... PROSILq).$$

Tout vecteur silhouette sera alors très proche d'au moins un des prototypes silhouettes.

La "caractéristique silhouette" SIL(F) de la forme F sera systématiquement remplacée par le prototype silhouette le plus proche du vecteur silhouette initial de F.

Dans le cadre de l'invention, on identifie pour toute image D de la base de données, une liste de formes présentes sur l'image D, par un procédé informatisable quelconque, supervisé ou non, (tel que segmentation automatique de l'image, recherche méthodique à partir d'une première banque de formes, etc.).

L'ensemble des formes (F1, F2... Fr) identifiées sur une même image D peut alors être décrit par un seul vecteur de dimension q, dénoté GRAPH(D), et représentant le Contenu Graphique de l'image D.

Les coordonnées GRj du vecteur GRAPH(D) = (GR1, GR2... GRq), pour j variant de 1 à q, sont calculées comme suit :

GRj = 1/q si le prototype silhouette PROSILj est égal à l'une des silhouettes SIL(F1), SIL(F2)... SIL(Fr),

GRj = 0 dans tous les autres cas.

L'ensemble de tous les Contenus Graphiques GRAPH(D) associés à l'ensemble des images D de la base de données appartient à l'espace vectoriel (de dimension q) des Contenus Graphiques. On peut alors définir une distance entre contenus graphiques de deux images D et D', de façon tout à fait analogue à celle qui a été utilisée en sections 2.1 et 2.3 (voir formules DELTA et/ou GAMMA )

### 2.4 Autres Caractéristiques - caractéristiques sémantiques

Dans d'autres variantes de l'invention, certaines des caractéristiques techniques ci-dessus peuvent être éliminées, de même que beaucoup d'autres caractéristiques techniques d'images ou de formes peuvent être spécifiées et prises en compte, suivant des schémas de mise en oeuvre analogues, comme par exemple :

le "graphe de connexité" recensant tous les couples de régions contiguës dans le découpage en régions R1, R2...

Rk; fourni par segmentation automatique,

les réponses à certains filtres spatiaux destinés à repérer les points de forts contrastes locaux, les positions d'angles ou de coins, etc.

les répartitions de "contours" détectés sur l'image par des détecteurs de contours,

etc.

De plus, à tout document D qui n'est pas de type "texte", il est possible d'adjoindre un texte non structuré écrit en mode tout à fait libre, contenant quelques mots, groupes de mots, lignes, phrases, ou paragraphes, et constituant un descriptif approximatif des informations majeures contenues dans le document D.

Ce descriptif textuel peut être soit une fiche conçue spécialement par un documentaliste, soit un texte plus informel faisant simplement allusion directe ou indirecte au contenu du document D.

A titre d'exemple :

- si D est l'image d'un objet d'art, le texte adjoint peut être une notice de musée ou un descriptif d'auteur et origine, ou simplement le titre d'un tableau, etc.
- si D est une photo extraite d'un journal électronique, le texte adjoint peut être une simple légende, ou un extrait d'article accompagnant cette photo, etc.

Ce type de texte adjoint peut, dans une première variante du procédé, être directement extrait de la base de données multimédia par l'opérateur utilisateur du procédé, qui au vu du document D se bornera alors à sélectionner dans la base textuelle existante, et sur interface informatique standard, le document texte qu'il souhaite choisir comme texte adjoint, puis à enregistrer l'adresse de ce texte dans une table de correspondances mémorisée sur disque dur.

On peut aussi prévoir une interface informatique standard permettant à l'opérateur d'introduire sur son ordinateur, par dactylographie clavier, les textes adjoints à tous les documents de la base de données multimédia (ou à une partie seulement de ces documents). Dans cette approche de durée plus longue, les textes adjoints seront en général courts et pourront même se limiter à quelques mots.

Dans une variante du procédé, applicable à certaines classes de documents D de type vidéo ou de type enregistrement sonore, l'opérateur peut mettre en oeuvre un programme informatique transcrivant automatiquement sous forme d'un texte T l'enregistrement de voix figurant sur la bande son de la vidéo D, ou figurant sur l'enregistrement sonore D. Des logiciels du commerce dédiés à cette tâche (comme les machines à dicter de IBM) commencent à émerger pour l'anglais et le français, mais sont souvent confinés techniquement au discours mono-locuteur sans fond musical ni bruit parasite.

Des moteurs de recherche textuels existant permettent d'associer à un texte quelconque T un vecteur (généralement de grande dimension) $V(T)$, permettant de coder approximativement le contenu sémantique du texte T.

De même de nombreuses procédures informatisables ont été proposées pour calculer un écart numérique $DIS(T,T')$ mesurant quantitativement la différence entre les contenus sémantiques de deux textes T et T', calculable directement à partir de $V(T)$ et $V(T')$.

Fixons une quelconque de ces procédures permettant le calcul de $V(T)$ et de $DIS(T,T')$. Pour tout document D qui n'est pas de type texte, l'opérateur, partant du texte adjoint à D dénoté txtD, peut définir une caractéristique sémantique de contenu $SEM(D)$ du document non textuel D par $SEM(D) = V(txtD)$. On peut alors calculer la distance DISSEM entre les caractéristiques sémantiques de deux documents quelconques D et D' par la formule $DIS(txtD, txtD')$.

Cette caractéristique sémantique $SEM(D)$ peut être adjointe aux caractéristiques techniques déjà traitées ci-dessus, et en particulier donner lieu à la création d'une table d'hyperliens sémantiques TABSEM, regroupant pour chaque document D la liste ordonnée $VOISEM(D)$ de ses "voisins sémantiques" les plus proches.

La caractéristique sémantique peut donc être intégrée dans les schémas de navigation préférentiels multicritères présentés ci-dessus, ce qui permet par exemple de croiser l'effet des critères graphiques et des critères sémantiques.

## 3. Autres bases de données

### 3.1 Vidéo

Une séquence d'images vidéo sera découpée de façon automatisée ou interactive en plans/séquences. La famille d'images $F(D) = (J1, J2... Js)$ regroupant les images-début J1 à Js des plans/séquences constitue un résumé naturel de la vidéo D. Notons que l'entier s peut dépendre de la vidéo D.

Ces familles d'images seront traitées de façon similaire à ce qui a été exposé en section 2.

### 3.2 Documents sonores

Selon un aspect de l'invention, on commence par calculer pour tout document sonore numérisé D une représentation de type "image spectrogramme" qui consiste à découper l'enregistrement D en n fragments consécutifs très courts et de durées égales (moins d'une seconde en général), dénotés par :

FRAG1, FRAG2, FRAG3... FRAGn,

puis on calcule la transformée de Fourier rapide ou FFT de chaque fragment, ce qui fournit une séquence de vecteurs :

FFT1, FFT2, FFT3... FFTn.

Tous ces vecteurs FFTj sont de même dimension q, nombre en général égal à l'un des entiers 16, 32, 64, 128, 256, 512. Le nombre q indique que la gamme globale de fréquences audibles a été divisée par l'opérateur utilisateur du procédé en q bandes de fréquences consécutives numérotées de 1 à q, selon une échelle arithmétique, ou logarithmique, au choix.

La coordonnée numéro k du vecteur FFTj représente alors l'énergie spectrale Ejk du fragment sonore FRAGj dans la bande de fréquence numéro k.

Le tableau des nombres Ejk, où j varie de 1 à n, et k varie de 1 à q peut être représenté graphiquement par une image synthétique où l'intensité lumineuse du pixel de coordonnées j et k est égale à Ejk. L'image spectrogramme a donc un nombre de pixels égal à n x k.

L'invention prévoit alors d'appliquer systématiquement toutes les techniques que nous avons indiqué ci-dessus dans le cas des images pour calculer automatiquement des caractéristiques techniques de contenu correspondantes pour les documents sonores.

L'opérateur utilisateur du procédé spécifie une notion simplifiée de "couleur sonore" en découpant la gamme des énergies spectrales en un petit nombre h d'intervalles numériques consécutifs (L1, L2, L3... Lh).

Un pixel de l'image spectrogramme sera dit de couleur sonore numéro i, si son intensité lumineuse a une valeur appartenant à l'intervalle Li.

Dans une variante de l'invention le découpage de l'image en zones homogènes de même couleur sonore et le choix optimal des intervalles (L1, L2, L3... Lh) peuvent être réalisés automatiquement par un quelconque des procédés existants de segmentation informatique d'images.

Le procédé décrit ci-dessus en sections 2.1 dans le cas des images numériques ordinaires, fournit alors pour chaque image spectrogramme, une "Répartition de Couleurs", que nous appellerons "Répartition de Couleurs Sonores" du document sonore D, et fournit aussi le mode de calcul de la Distance entre deux Répartitions de Couleurs Sonores.

Le procédé décrit en section 2.2 fournit pour chaque image spectrogramme, une Répartition de Textures, que nous appellerons "Répartition de Textures Sonores" du document sonore D, et fournit aussi le mode de calcul de la Distance entre deux Répartitions de Textures Sonores.

Enfin le procédé décrit en section 2.3 permet de définir pour chaque document sonore D un vecteur de Contenu Graphique associé à l'image spectrogramme J = IMSPECT(D), les "formes" présentes dans J étant déterminées par segmentation automatique en régions homogènes du point de vue couleurs sonores.

Le procédé de la section 2 fournit aussi un mode de calcul de la Distance entre les Contenus graphiques de deux documents sonores.

Dans une variante de l'invention le traitement initial des fragments FRAGj du document sonore par transformée de Fourier rapide peut être remplacé par des transformations sur bases d'ondelettes, qui associeront à chaque fragment FRAGj un vecteur WWj, tout à fait analogue au vecteur FFTj introduit ci-dessus. Le reste de la procédure se déroule de façon analogue.

### 4. Variantes

Bien entendu, la présente invention est susceptible de diverses variantes et modifications qui apparaîtront à l'homme de l'art.

En particulier, l'opérateur pourra sélectionner et enregistrer à l'écran des sous-documents adéquats, au moyen d'une interface homme machine appropriée, réalisable par exemple sous Director, ou encore en code Java, etc.

Le principe est le suivant : l'opérateur inspecte à l'écran un document (visualisation d'image, défilement vidéo, écoute de document sonore), puis sélectionne par clic-souris les portions de documents qui l'intéressent, telles que régions d'une image, plan/séquence vidéo, fragment continu d'enregistrement son, etc. Ces choix de l'opérateur sont enregistrés de façon standard dans la base de données multimédia initiale, pour créer ainsi une base de données multimédia étendue où les portions de documents ainsi définies ont le statut de documents à part entière et jouent exactement le même rôle que les documents initiaux dans la base de données multimédia.

Les sous-documents d'une image peuvent être n'importe quelle région de l'image, détourée à l'écran par une ligne polygonale (ou par une courbe continue) tracée à la souris par l'utilisateur. En général l'opérateur sélectionnera des régions sémantiquement signifiantes (personnages, bâtiments, etc.).

Les sous-documents d'une vidéo seront soit des "plans/séquences" (portions de vidéo comprises entre une image-début et une image-fin), soit des images isolées extraites de la vidéo, par exemple les images de changement de plans/séquences.

Pendant l'écoute d'un enregistrement sonore informatisé, une interface homme-machine standard peut permettre à l'opérateur de marquer par clic-souris le début et la fin des "fragments sonores continus" qui l'intéressent.

De plus, les procédés de mise sous forme vectorielle d'une image pour diverses caractéristiques techniques sont susceptibles de diverses variantes qui apparaîtront à l'homme de l'art.

## Revendications

1. Procédé de navigation associative dans une base de données comportant un grand nombre de documents (D) décomposables en éléments (R1 à Rk), chaque élément étant décrit par un état ou une valeur d'une même caractéristique technique, comprenant les étapes suivantes :

   a) analyser la répartition globale des valeurs prises par ladite caractéristique technique sur l'ensemble des éléments de tous les documents de la base de données, pour constituer une famille suffisamment représentative, mais cependant de taille réduite, de valeurs prototypes pour ladite caractéristique technique ;
   b) former à partir de chaque document de la base de données un vecteur dont chaque coordonnée correspond à une valeur prototype de ladite caractéristique, la valeur de chaque coordonnée du vecteur correspondant à la fréquence d'apparition de ladite valeur prototype dans le document ;
   c) déterminer les distances entre les vecteurs des divers documents de la base de données ; et
   d) associer à chaque document une liste des documents les plus proches pour ladite caractéristique.

2. Procédé selon la revendication 1, **caractérisé en ce que** les étapes a) à d) sont répétées pour diverses caractéristiques techniques associables aux documents de la base de données et **en ce que**, à chaque document, sont associées plusieurs listes de documents les plus proches, chaque liste correspondant à l'une desdites caractéristiques.

3. Procédé selon la revendication 2, **caractérisé en ce qu'**il comprend l'étape consistant à réaliser une liste de documents les plus proches, résultant d'une combinaison pondérée des listes correspondant aux diverses caractéristiques.

4. Procédé selon la revendication 1, dans lequel les documents sont des images, **caractérisé en ce que** la formation dudit vecteur REPCOL(D) comprend les étapes suivantes :

   décomposer chaque image en un nombre k de régions (R1 à Rk) homogènes vis-à-vis de ladite caractéristique et pour lesquelles la valeur moyenne (COL1 à COLk) de ladite caractéristique est déterminée ;
   déterminer la surface relative (S1 à Sk) de chaque région homogène ;
   créer une palette de n valeurs prototypes (n » k) de ladite caractéristique suffisamment proches de toutes les valeurs moyennes observées ;
   déterminer pour chaque valeur moyenne (COLj) de chaque image le numéro d'ordre (Mj) de la valeur prototype la plus proche ;
   poser $G = (M1, M2... Mk)$ ;
   construire un vecteur REPCOL $(D) = (RC1... RCn)$ tel que $RCi = 0$ si i n'appartient pas à G et $RCi = Sj$ si i appartient à G et est égal à Mj.

5. Procédé selon la revendication 4, dans lequel les caractéristiques sont des couleurs, et lesdites régions (R1 à Rk) sont de couleurs homogènes (COL1 à COLk).

6. Procédé selon la revendication 4, dans lequel les caractéristiques sont des textures, et lesdites régions (R1 à Rk) sont de textures homogènes (TEX1 à TEXk).

7. Procédé selon la revendication 4, dans lequel les caractéristiques sont des formes, et lesdites régions (R1 à Rk) ont pour contours extérieurs, ou silhouettes, des formes homologues SIL1 à SILk).

**FIGURE 1**

| Région homogène R | Couleur COL(D) | Surface relative SURF(D) |
|---|---|---|
| R1 | COL1 | S1 = 40 % |
| R2 | COL2 | S2 = 10 % |
| R3 | COL3 | S3 = 10 % |
| R4 | COL4 | S4 = 10 % |
| R5 | COL5 | S5 = 5 % |
| R6 | COL6 | S6 = 5 % |
| R7 | COL7 | S7 = 20 % |

**FIGURE 2**

PALCOL

REPCOL(D)

| PROCOL1 | 0 |
| PROCOL2 | 0 |
| PROCOL3 | 0 |
| . | 0 |
| . | 10(S2) |
| . | 0 |
| . | 0 |
| . | 0 |
| . | 0 |
| . | 5(S6) |
| . | 0 |
| . | 0 |
| . | 0 |
| . | 0 |
| . | 40(S1) |
| . | 0 |
| . | 0 |
| . | 0 |
| . | 0 |

COL4 ⟷   PROCOLm  (M4)   10(S4)

|  | 0 |
| . | 0 |
| . | 0 |
| . | 0 |
| . | 20(S7) |
| . | 10(S3) |
| . | 0 |
| . | 0 |
| . | 0 |
| . | 0 |
| . | 5(S5) |
| . | 0 |
| . | 0 |
| . | 0 |
| PROCOLn | 0 |

FIGURE 3

**Office européen des brevets**

**RAPPORT DE RECHERCHE EUROPEENNE**

Numéro de la demande

EP 00 41 0103

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | BABU M MEHTRE ET AL: "COLOR MATCHING FOR IMAGE RETRIEVAL" PATTERN RECOGNITION LETTERS, NORTH-HOLLAND PUBL. AMSTERDAM, NL, vol. 16, no. 3, 1 mars 1995 (1995-03-01), pages 325-331, XP000500602 ISSN: 0167-8655 * page 325, colonne de gauche, ligne 1 – page 326, colonne de gauche, ligne 20 * * page 328, colonne de gauche, ligne 1 – page 328, colonne de droite, ligne 9 * | 1-7 | G06F17/30 |
| A | WO 00 02111 A (KONINKL PHILIPS ELECTRONICS NV ;PHILIPS SVENSKA AB (SE)) 13 janvier 2000 (2000-01-13) * page 4, ligne 9 – page 5, ligne 20 * * page 6, ligne 4-32 * | 1-7 | |
| A | WO 00 42525 A (KONINKL PHILIPS ELECTRONICS NV) 20 juillet 2000 (2000-07-20) * page 6, ligne 9 – page 7, ligne 7 * * page 8, ligne 21 – page 9, ligne 14 * | 1-7 | DOMAINES TECHNIQUES RECHERCHES (Int.Cl.7) G06F |
| A | WO 98 52119 A (CHANG SHIH FU ;UNIV COLUMBIA (US); SMITH JOHN R (US)) 19 novembre 1998 (1998-11-19) * page 3, ligne 10 – page 4, ligne 30 * * page 5, ligne 4-6 * | 1-7 | |

Le présent rapport a été établi pour toutes les revendications

| Lieu de la recherche | Date d'achèvement de la recherche | Examinateur |
|---|---|---|
| LA HAYE | 21 août 2001 | Correia Martins, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**

EP 00 41 0103

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-08-2001

| Document brevet cité au rapport de recherche | | Date de publication | Membre(s) de la famille de brevet(s) | | Date de publication |
|---|---|---|---|---|---|
| WO 0002111 | A | 13-01-2000 | EP | 1040403 A | 04-10-2000 |
| WO 0042525 | A | 20-07-2000 | EP | 1064608 A | 03-01-2001 |
| WO 9852119 | A | 19-11-1998 | AUCUN | | |

EPO FORM P0460

Pour tout renseignement concernant cette annexe : voir Journal Officiel de l'Office européen des brevets, No.12/82